# EUROPEAN PATENT SPECIFICATION

(11) **EP 0 774 819 B1**
(45) Date of publication and mention of the grant of the patent: **10.10.2001**
(21) Application number: 96308307.6
(22) Date of filing: 18.11.1996
(51) Int. Cl.: H02G 15/10, H02G 15/12, H02G 9/10

(54) **Cable equipment enclosure**
Gehäuse für elektrische Geräte
Boîtier d'équipement électrique

(30) Priority: 17.11.1995 GB 9523535
(43) Date of publication of application: 21.05.1997
(73) Proprietor: BOWTHORPE PLC, Crawley, West Sussex RH10 2RZ (GB)
(72) Inventor: Foss,Raymond Charles, Peverell, Plymouth PL3 4NX (GB)
(74) Representative: Gibson, Stewart Harry

(56) References cited:
- WO-A-93/10585
- DE-A- 1 634 624
- GB-A- 2 188 360
- GB-A- 2 272 115
- GB-A- 2 295 791
- US-A- 4 708 258

## Description

The present invention relates to a cable equipment enclosure for use underground.

There is a common need to connect telecommunications cables, e.g. telephone cables or cable television lines, with associated equipment. It is necessary to provide enclosures for cable splices or connectors and also to house equipment to which the cables are connected. Many cables are laid underground and our UK patent No. 2277644 (WO93/10585) discloses a cable jointing enclosure which comprises a one-piece housing formed by rotational moulding and having an opening in its top, and at least one part in its side for the entry of one or more electric cables.

We have now devised a cable equipment enclosure, for underground use, which exhibits a number of improvements.

In accordance with the present invention, there is provided an enclosure for electrical equipment and for use underground, the enclosure comprising a housing formed by rotational moulding and having an open top and formed with at least one port in its side for the entry of one or more electric cables, characterised in that said housing forms an outer housing and the enclosure further comprises an inner housing disposed within said outer housing, said inner and outer housings being circular or generally oval in cross-section and a space between said inner and outer housings being filled with foamed plastics material.

This arrangement provides a construction which is very strong and rigid, so that it is well able to resist internal or external pressure. A further advantage of the construction is that even if the outer housing is punctured, water can still not enter the enclosure unless and until the inner housing becomes punctured.

Preferably the bottom of the inner housing is concave-curved, to resist internal air pressure. Preferably the bottom of the outer housing is correspondingly concave-curved.

The inner and outer housings may comprise separate mouldings, the inner being fitted into the outer. In this case, the two housings may be of different materials: for example, the inner housing may comprise a material, such as polypropylene which is rigid even at high pressures and temperature, whilst the outer housing may comprise a material, such as chemically cross-linked polyethylene, which has high impact resistance.

Alternatively, the enclosure may be made as a single rotational moulding such that the inner and outer housings are formed together as one-piece.

Preferably the outer housing has a peripheral collar portion which runs around the inner housing adjacent its open top. Preferably the enclosure further comprises a metal cover which fits over the open top of the inner housing. Preferably the cover includes a peripheral flange which seats on a peripheral neck of the enclosure, with the interposition of a seal. Because the enclosure is circular or generally oval in cross-section, the peripheral flange of the cover and the corresponding neck of the enclosure can be engaged and tightened together by a ring clamp: this form of securement can be applied or released in much less time than if the enclosure were rectangular and a large number of separate fixings had to be applied at spaced points along its sides.

Preferably the inner housing includes at least one tubular projection, the end of which includes one or more ports for the entry of cables, and is accessible through an opening in the outer housing. Preferably this tubular projection extends outwardly and upwardly and the corresponding opening in the outer housing lies in a portion of the wall of the latter which slopes outwardly and downwardly. Alternatively the outer housing may comprise a socket which extends inwardly to the peripheral wall of the inner housing.

A further advantage of the enclosure housing being circular or generally oval in cross-section is that, under internal or external pressure, the peripheral wall of the housing will deflect less than would the wall of a straight-sided rectangular housing.

GB-2188360 discloses an enclosure which comprises inner and outer housings formed by rotational moulding, with the space between them filled with foamed plastics material. The enclosure is rectangular in shape and serves as a tank for transporting liquid: it is not intended for burying underground to house electrical equipment and does not have any port in its side, capable of being used for the entry of cables.

US-4,708,258 discloses an enclosure in the form of a drum for hazardous waste. The drum is formed by rotational moulding and is circular in section. The enclosure is not intended for burying underground to house electrical equipment and does not have any port in its side, capable of being used for the entry of cables.

Embodiments of the present invention will now be described by way of examples only and with reference to the accompanying drawings, in which:
FIGURE 1 is a longitudinal section through a first embodiment of enclosure in accordance with the present invention;
FIGURE 2 is an end view of the enclosure of Figure 1;
FIGURE 3 is a partial plan view of the enclosure of Figures 1 and 2; and
FIGURE 4 is a section through a mould for forming a second embodiment of enclosure.

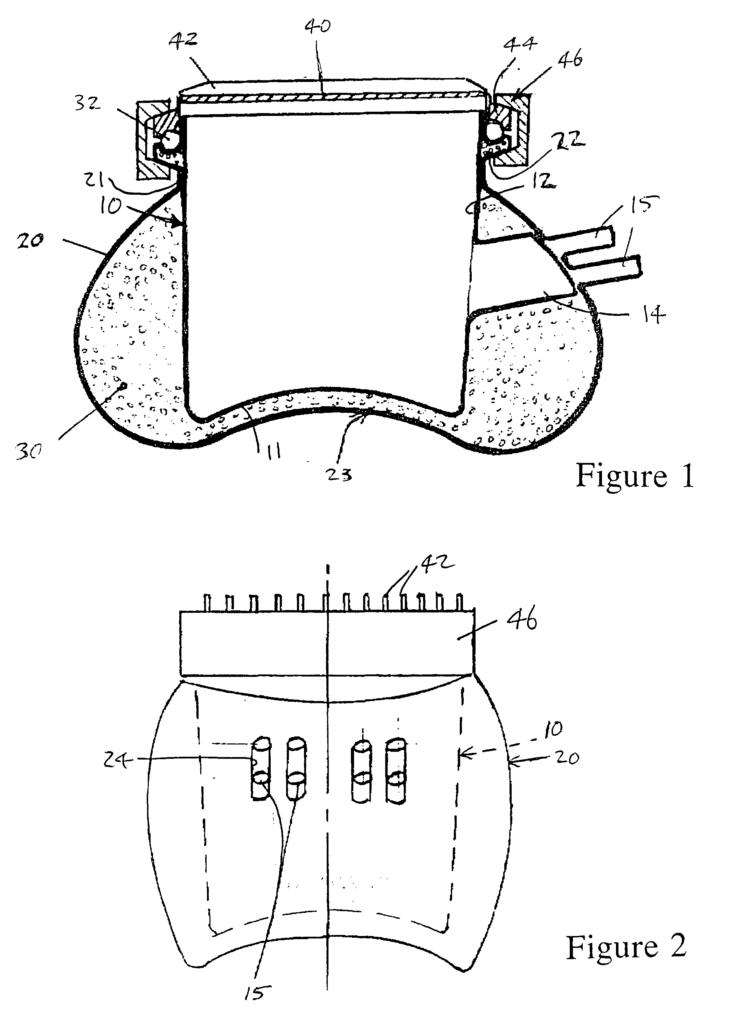

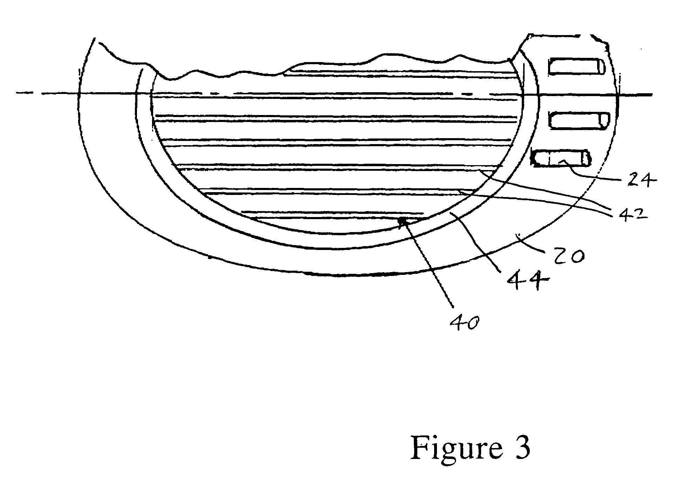

Referring to Figures 1 to 3 of the drawings, there is shown an enclosure which comprises an inner housing 10 which has a generally oval cross-section, a concave bottom wall 11, a generally upright peripheral wall 12 and an open top. The inner housing 10 also has, at either or both ends, a projecting tubular portion 14, the outer end of which is formed with ports 15 through which cables may enter or leave the enclosure and are connected to electrical equipment which, in use, is installed in the enclosure. The enclosure further comprises an outer housing 20 into which the inner housing 10 is fitted, with the space between the two housings filled with foamed plastics material 30.

The outer housing 20 includes a collar portion 21 which fits closely around the inner housing 10, and an enlarged neck 22 immediately above the collar 21, the neck 22 being filled with foamed plastics and formed, in its upper surface, with a peripheral groove to receive a soft rubber seal 32. The outer housing 20 has a concave bottom wall 23 which is spaced from and follows the contours of the bottom wall 11 of the inner housing 10. Below the collar portion 21, the side wall of the outer housing 20 curves outwardly, then downwardly and finally inwardly to meet the bottom wall 23. It will be noted that the space between the inner and outer housings is greater at the opposite ends of the enclosure than along it opposite sides. The outer housing 20 is formed with an opening 24 through which the cable entry ports 15 project: the outer end of the projecting tubular portion 14 of the inner housing 10 abuts the inner surface of the outer housing 20 around the opening 24.

The enclosure of Figures 1 to 3 further comprises a generally oval-shape cover 40, which is die cast from aluminium and includes longitudinal ribs 42 on its outer surface, to increase the surface area for heat transfer. The cover 40 also includes a peripheral flange 44 the underside of which is formed with a groove to engage the seal 32. The enclosure further includes a ring clamp 46, which has a groove with tapered sides on its inner periphery, for engaging correspondingly tapered surfaces on the top of the flange 44 of the cover and the underside of the neck portion 22, respectively, of the outer housing 20. The clamp 46 may comprise a one-piece ring which is split at one point around its circumference, or a two-piece ring: the clamp includes means for tightening its split ends together in order to secure the cover 40 tightly, and in sealed manner, onto the enclosure.

The inner and outer housings 10,20 of the enclosure of Figures 1 to 3 are formed separately from plastics material by rotational moulding, the materials of the two housings having different characteristics if required. The foamed plastics material 30 may be injected into the space between the two housings after the inner housing 10 has been fitted into the outer housing 20.

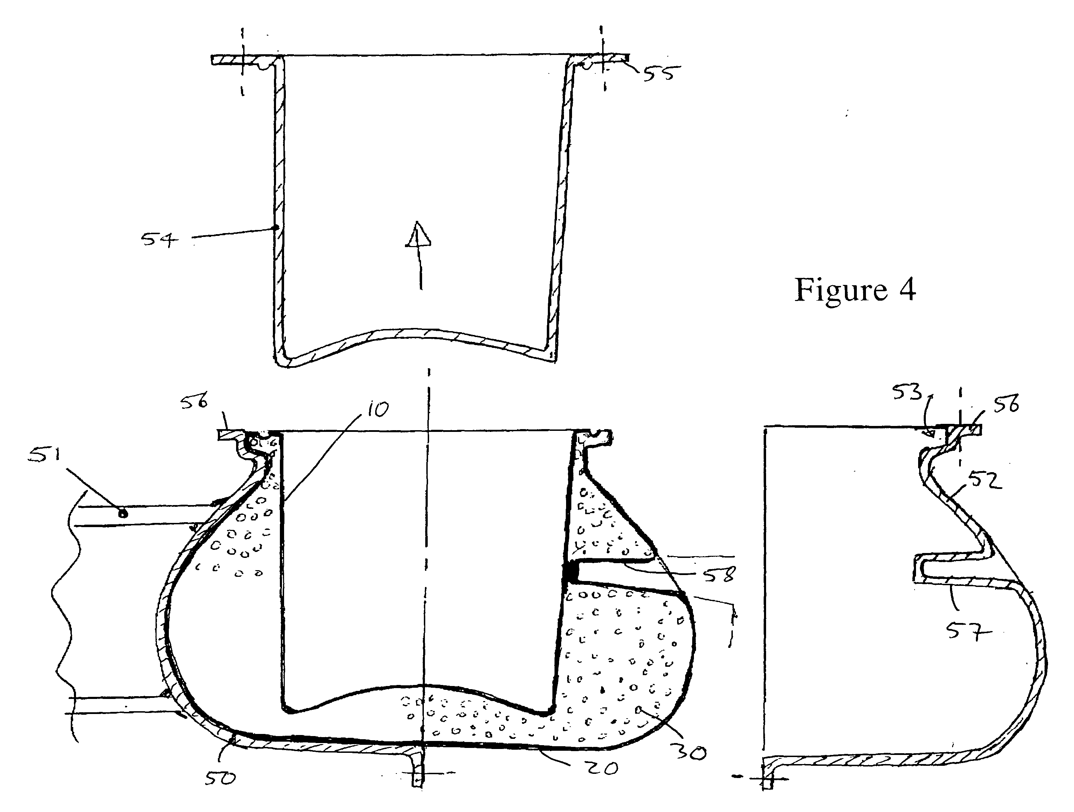

Referring to Figure 4, the enclosure may be made as a single rotational moulding, such that the inner and outer housings are formed together as one-piece. Thus, in the example shown in Figure 4, the enclosure is made using a mould having a first mould part 50 fixed to the rotating part 51 of the moulding machine, and a second mould part 52 which is separable from the first mould part 50 in the lengthwise direction of the enclosure being made. The mould comprises a third, cup-shaped mould part 54, which is fitted into an opening 53 which remains when the mould parts 50,52 are clamped together, a flange 55 on the mould part 54 being then clamped to a flange 56 around the latter opening. The mould part 52 is formed with a re-entrant tubular portion 57, which leaves a small gap between its inner end and the outer surface of the inner mould part 54. During the rotational moulding process, the plastics material (introduced into the mould 50,52 before the mould part 54 is fitted) costs the inner surfaces of the mould parts 50,52 and the outer surfaces of the mould part 54, to form the inner and outer housings 10,20 as a one-piece moulding. The outer housing is accordingly formed with a socket 58, of which the inner end is united with the wall of the inner housing.

After the enclosure has been moulded, firstly the inner mould part 54 is removed, then the mould part 52 is removed from the mould part 50, and finally the moulded enclosure is removed. The foamed plastics material 30 may be injected into the enclosure subsequent to formation of the enclosure. Alternatively, the plastics material from which the enclosure is moulded may incorporate of blowing agent, so that the body 30 of foamed plastics is formed at the same time as the enclosure walls 10,20: in effect, the enclosure will then comprise a body of foamed plastics having internal and external skins.

In a modification, a metal (e.g. aluminium) sheet may be wrapped around the outer periphery of the inner mould part 54, before the latter is fitted into the mould parts 50,52. The enclosure which is then formed incorporates the aluminium sheet as an internal lining for the peripheral wall of the inner housing. This gives increased rigidity to the enclosure and provides RF screening.

It will be appreciated that the enclosure of Figure 4 is completed by a cover, seal and clamp arrangement as described above for the embodiment of Figures 1 to 3.

## Claims

1. An enclosure for electrical equipment and for use underground, the enclosure comprising a housing (20) formed by rotational moulding and having an open top and formed with at least one port (14,15) in its side for the entry of one or more electric cables, **characterised in that** said housing (20) forms an outer housing and the enclosure further comprises an inner housing (10) disposed within said outer housing (20), said inner and outer housings (10,20) being circular or generally oval in cross-section and a space between said inner and outer housings being filled with foamed plastics material (30).

2. An enclosure as claimed in claim 1, **characterised in that** the bottom (11) of said inner housing (10) is concave-curved.

3. An enclosure as claimed in claim 1 or 2, **characterised in that** the bottom (23) of said outer housing (20) is concave-curved.

4. An enclosure as claimed in any preceding claim, **characterised in that** said inner and outer housings (10,20) comprise separate mouldings, said inner housing (10) being fitted into said outer housing (20).

5. An enclosure as claimed in claim 4, **characterised in that** said inner housing (10) comprises a rigid material.

6. An enclosure as claimed in claim 4 or 5, **characterised in that** said outer housing (20) comprises a material having high impact resistance.

7. An enclosure as claimed in any one of claims 1 to 3,
**characterised in that** said inner and outer housings (10,20) comprise a one-piece rotational moulding.

8. An enclosure as claimed in any preceding claim, **characterised in that** said outer housing (20) has a peripheral collar portion (21) which runs around said inner housing (10) adjacent its open top.

9. An enclosure as claimed in any preceding claim, **characterised in that** a metal cover (40) is provided, which fits over the open top of said inner housing (10).

10. An enclosure as claimed in claim 9, **characterised in that** said cover (40) includes a peripheral flange (44) which seats on a peripheral neck (22) of said enclosure, with the interposition of a seal (32).

11. An enclosure as claimed in any preceding claim, **characterised in that** said inner housing (10) includes at least one tubular projection (14), the outer end of which includes one or more said ports (15) for the entry of cables, and is accessible through an opening (24) in said outer housing (20).

12. An enclosure as claimed in claim 11, **characterised in that** said tubular projection (15) projects outwardly and upwardly from the side of said inner housing (10) and the corresponding opening (24) in said outer housing (20) lies in a portion of the wall of the latter which slopes outwardly and downwardly.

13. An enclosure as claimed in any one of claims 1 to 10, **characterised in that** said outer housing (20) comprises a socket (58) which extends inwardly to the peripheral wall of said inner housing (10), to provide said cable entry port.

14. A method of making an enclosure for electrical equipment and for use underground, comprising forming a housing (20) by rotational moulding, said housing having an open top and at least one port (14,15) in its side for the entry of one or more electric cables, **characterised in that** said housing (20) forms an outer housing of said enclosure and the method also comprises forming an inner housing (10) by rotational moulding, the inner housing (10) being formed within or disposed within the outer housing (20), and filling a space between said inner and outer housings with foamed plastics material (30), said inner and outer housings (10,20) being circular or generally oval in cross-section.

15. A method as claimed in claim 1, **characterised in that** the bottom (11) of said inner housing (10) is concave-curved.

16. A method as claimed in claim 1 or 2, **characterised in that** the bottom (23) of said outer housing (20) is concave-curved.

17. A method as claimed in any one of claims 14 to 16, **characterised in that** said inner and outer housings (10,20) are formed as separate rotational mouldings, the inner housing (10) thereafter being fitted into said outer housing (20).

18. A method as claimed in claim 17, **characterised in that** said inner housing (10) comprises a rigid material.

19. A method as claimed in claim 17 or 18, **characterised in that** said outer housing (20) comprises a material having high impact resistance.

20. A method as claimed in any one of claims 14 to 16, **characterised in that** said inner and outer housings (10,20) are formed together as a single rotational moulding.

21. A method as claimed in any one of claims 14 to 20, **characterised in that** said outer housing (20) is formed with a peripheral collar portion (21) which runs around said inner housing (10) adjacent its open top.

22. A method as claimed in any one of claims 14 to 21, **characterised in that** said inner housing is formed with at least one tubular projection (14), the outer end of which includes one or more said ports (15) for the entry of cables, and an opening (24) is formed in the side of said outer housing (20) for access to said ports (15).

23. A method as claimed in claim 22, **characterised in that** said tubular portion (15) projects outwardly and upwardly from the side of said inner housing (10) and the corresponding opening (24) in said outer housing (20) is formed in a portion of the wall of the latter which slopes outwardly and downwardly.

24. A method as claimed in any one of claims 14 to 21, in that said outer housing (20) is formed with a socket (58) which extends inwardly to the peripheral wall of said inner housing (10), to provide said cable entry port.

## Patentansprüche

1. Umhüllung für elektrische Einrichtungen und zur Verwendung unter der Erde, wobei die Umhüllung ein durch Rotationsformen hergestelltes Gehäuse (20) umfaßt, das oben offen ist und mit mindestens einer Öffnung (14, 15) in seiner Seite zum Eintritt eines oder mehrerer elektrischer Kabel ausgebildet ist, **dadurch gekennzeichnet, daß** das Gehäuse (20) ein äußeres Gehäuse bildet und die Umhüllung weiterhin ein im äußeren Gehäuse (20) angeordnetes inneres Gehäuse (10) umfaßt, wobei das innere und das äußere Gehäuse (10, 20) einen kreisrunden oder allgemein ovalen Querschnitt aufweisen und ein Raum zwischen dem inneren und dem äußeren Gehäuse mit geschäumtem Kunststoff (30) gefüllt ist.

2. Umhüllung nach Anspruch 1, **dadurch gekennzeichnet, daß** der Boden (11) des inneren Gehäuses (10) konkav gekrümmt ist.

3. Umhüllung nach Anspruch 1 oder 2, **dadurch gekennzeichnet, daß** der Boden (23) des äußeren Gehäuses (20) konkav gekrümmt ist.

4. Umhüllung nach einem der vorhergehenden Ansprüche, **dadurch gekennzeichnet, daß** das innere und das äußere Gehäuse (10, 20) getrennte Formteile umfassen, wobei das innere Gehäuse (10) im äußeren Gehäuse (20) angeordnet ist.

5. Umhüllung nach Anspruch 4, **dadurch gekennzeichnet, daß** das innere Gehäuse (10) aus einem starren Material besteht.

6. Umhüllung nach Anspruch 4 oder 5, **dadurch gekennzeichnet, daß** das äußere Gehäuse (20) aus einem Material mit einer hohen Schlagzähigkeit besteht.

7. Umhüllung nach einem der Ansprüche 1 bis 3, **dadurch gekennzeichnet, daß** das innere und das äußere Gehäuse (10, 20) ein einstückiges Rotationsformteil umfassen.

8. Umhüllung nach einem der vorhergehenden Ansprüche, **dadurch gekennzeichnet, daß** das äußere Gehäuse (20) einen sich um den Umfang erstreckenden Bundteil (21) aufweist, der sich neben dem offenen oberen Ende des inneren Gehäuses (10) um dieses herum erstreckt.

9. Umhüllung nach einem der vorhergehenden Ansprüche, **dadurch gekennzeichnet, daß** eine Metallabdeckung (40) vorgesehen ist, die über das offene Ende des inneren Gehäuses (10) paßt.

10. Umhüllung nach Anspruch 9, **dadurch gekennzeichnet, daß** die Abdeckung (40) einen Umfangsflansch (44) enthält, der auf einem Umfangshals (22) der Umhüllung sitzt, wobei eine Dichtung (32) dazwischen angeordnet ist.

11. Umhüllung nach einem der vorhergehenden Ansprüche, **dadurch gekennzeichnet, daß** das innere Gehäuse (10) mindestens einen röhrenförmigen Vorsprung (14) enthält, dessen äußeres Ende eine oder mehrere Öffnungen (15) für den Eintritt von Kabeln enthält und durch eine Öffnung (24) im äußeren Gehäuse (20) zugänglich ist.

12. Umhüllung nach Anspruch 11, **dadurch gekennzeichnet, daß** der röhrenförmige Vorsprung (15) von der Seite des inneren Gehäuses (10) nach außen und nach oben ragt und die entsprechende Öffnung (24) im äußeren Gehäuse (20) in einem Teil der Wand des letzteren liegt, der sich nach außen und nach unten neigt.

13. Umhüllung nach einem der Ansprüche 1 bis 10, **dadurch gekennzeichnet, daß** das äußere Gehäuse (20) eine Aufnahme (58) enthält, die sich nach innen zur Umfangswand des inneren Gehäuses (10) erstreckt und so die Kabeleintrittsöffnung bildet.

14. Verfahren zur Herstellung einer Umhüllung für elektrische Einrichtungen und zur Verwendung unter der Erde, bei dem man durch Rotationsformen ein Gehäuse (20) herstellt, das oben offen ist und mit mindestens einer Öffnung (14, 15) in seiner Seite zum Eintritt eines oder mehrerer elektrischer Kabel ausgebildet ist, **dadurch gekennzeichnet, daß** das Gehäuse (20) ein äußeres Gehäuse der Umhüllung bildet und man bei dem Verfahren weiterhin durch Rotationsformen ein inneres Gehäuse (10) herstellt, das in dem äußeren Gehäuse (20) geformt oder dort angeordnet wird, und einen Raum zwischen dem inneren und dem äußeren Gehäuse mit geschäumtem Kunststoff (30) füllt, wobei das innere und das äußere Gehäuse (10, 20) einen kreisrunden oder allgemein ovalen Querschnitt aufweisen.

15. Verfahren nach Anspruch 1, **dadurch gekennzeichnet, daß** der Boden (11) des inneren Gehäuses (10) konkav gekrümmt ist.

16. Verfahren nach Anspruch 1 oder 2, **dadurch gekennzeichnet, daß** der Boden (23) des äußeren Gehäuses (20) konkav gekrümmt ist.

17. Verfahren nach einem der Ansprüche 14 bis 16, **dadurch gekennzeichnet, daß** das innere und das äußere Gehäuse (10, 20) als getrennte Rotationsformteile hergestellt werden, wobei das innere Gehäuse (10) danach im äußeren Gehäuse (20) angeordnet wird.

18. Verfahren nach Anspruch 17, **dadurch gekennzeichnet, daß** das innere Gehäuse (10) ein starres Material umfaßt.

19. Verfahren nach Anspruch 17 oder 18, **dadurch gekennzeichnet, daß** das äußere Gehäuse (20) ein Material mit einer hohen Schlagzähigkeit umfaßt.

20. Verfahren nach einem der Ansprüche 14 bis 16, **dadurch gekennzeichnet, daß** das innere und das äußere Gehäuse (10, 20) zusammen als ein einstückiges Rotationsformteil hergestellt werden.

21. Verfahren nach einem der Ansprüche 14 bis 20, **dadurch gekennzeichnet, daß** das äußere Gehäuse (20) mit einem sich um den Umfang erstreckenden Bundteil (21) hergestellt wird, der sich neben dem offenen oberen Ende des Gehäuses (10) um dieses herum erstreckt.

22. Verfahren nach einem der Ansprüche 14 bis 21, **dadurch gekennzeichnet, daß** das innere Gehäuse mit mindestens einem röhrenförmigen Vorsprung (14) hergestellt wird, dessen äußeres Ende eine oder mehrere Öffnungen (15) für den Eintritt von Kabeln enthält, und man in der Seite des äußeren Gehäuses (20) eine Öffnung (24) zum Zugang zu den Öffnungen (15) ausbildet.

23. Verfahren nach Anspruch 22, **dadurch gekennzeichnet, daß** der röhrenförmige Vorsprung (15) von der Seite des inneren Gehäuses (10) nach außen und nach oben ragt und die entsprechende Öffnung (24) im äußeren Gehäuse (20) in einem Teil der Wand des letzteren liegt, der sich nach außen und nach unten neigt.

24. Verfahren nach einem der Ansprüche 14 bis 21, **dadurch gekennzeichnet, daß** das äußere Gehäuse (20) mit eine Aufrahme (58) ausgebildet wird, die sich nach innen zur Umfangswand des inneren Gehäuses (10) erstreckt und so die Kabeleintrittsöffnung bildet.

## Revendications

1. Enceinte pour équipement électrique et pour l'utilisation souterraine, cette enceinte comprenant un boîtier (20) formé par moulage rotatif et ayant une partie supérieure ouverte et formé avec au moins un orifice (14, 15) dans sa partie latérale pour l'entrée d'un ou de plusieurs câbles électriques, **caractérisée en ce que** ledit boîtier (20) forme un boîtier extérieur et l'enceinte comprend en outre un boîtier intérieur (10) disposé à l'intérieur dudit boîtier extérieur (20), lesdits boîtiers intérieur et extérieur (10, 20) ayant une section transversale circulaire ou généralement ovale et un espace entre lesdits boîtiers intérieur et extérieur étant rempli de matière en plastique mousse (30).

2. Enceinte selon la revendication 1, **caractérisée en ce que** le fond (11) dudit boîtier intérieur (10) est de forme incurvée concave.

3. Enceinte selon la revendication 1 ou 2, **caractérisée en ce que** le fond (23) dudit boîtier extérieur (20) est de forme incurvée concave.

4. Enceinte selon l'une quelconque des revendications précédentes, **caractérisée en ce que** lesdits boîtiers intérieur et extérieur (10, 20) se composent de pièces moulées séparées, ledit boîtier intérieur (10) étant ajusté dans ledit boîtier extérieur (20).

5. Enceinte selon la revendication 4, **caractérisée en ce que** ledit boîtier intérieur (10) se compose d'un matériau rigide.

6. Enceinte selon la revendication 4 ou 5, **caractérisée en ce que** ledit boîtier extérieur (20) se compose d'un matériau ayant une haute résistance aux chocs.

7. Enceinte selon l'une quelconque des revendications 1 à 3, **caractérisée en ce que** lesdits boîtiers intérieur et extérieur (10, 20) se composent d'une pièce moulée par rotation d'une seule pièce.

8. Enceinte selon l'une quelconque des revendications précédentes, **caractérisée en ce que** ledit boîtier extérieur (20) a une portion de collier périphérique (21) qui s'étend tout autour dudit boîtier intérieur (10) à proximité de sa partie supérieure ouverte.

9. Enceinte selon l'une quelconque des revendications précédentes, **caractérisée en ce qu'**il est prévu un couvercle métallique (40) qui s'adapte sur la partie supérieure ouverte dudit boîtier intérieur (10).

10. Enceinte selon la revendication 9, **caractérisée en ce que** ledit couvercle (40) comporte une bride périphérique (44) qui repose sur un col périphérique (22) de ladite enceinte, avec l'interposition d'un joint (32).

11. Enceinte selon l'une quelconque des revendications précédentes, **caractérisée en ce que** ledit boîtier intérieur (10) comporte au moins une prolongation tubulaire (14), dont l'extrémité extérieure comporte un ou plusieurs desdits orifices (15) pour l'entrée des câbles, et est accessible à travers une ouverture (24) dans ledit boîtier extérieur (20).

12. Enceinte selon la revendication 11, **caractérisée en ce que** ladite prolongation tubulaire (14) fait saillie vers l'extérieur et vers le haut depuis la partie latérale dudit boîtier intérieur (10) et l'ouverture correspondante (24) dans ledit boîtier extérieur (20) se trouve dans une portion de la paroi de ce dernier inclinée vers l'extérieur et vers le bas.

13. Enceinte selon l'une quelconque des revendications 1 à 10, **caractérisée en ce que** ledit boîtier extérieur (20) comprend une douille (58) qui s'étend vers l'intérieur jusqu'à la paroi périphérique dudit boîtier intérieur (10), pour fournir ledit orifice d'entrée de câble.

14. Procédé de fabrication d'une enceinte pour équipement électrique et pour l'utilisation souterraine, comprenant la formation d'un boîtier (20) par moulage rotatif, ledit boîtier ayant une partie supérieure ouverte et au moins un orifice (14, 15) dans sa partie latérale pour l'entrée d'un ou de plusieurs câbles électriques, **caractérisé en ce que** ledit boîtier (20) forme un boîtier extérieur de ladite enceinte et le procédé comprend également la formation d'un boîtier intérieur (10) par moulage rotatif, le boîtier intérieur (10) étant formé à l'intérieur ou disposé à l'intérieur du boîtier extérieur (20), et le remplissage d'un espace entre lesdits boîtiers intérieur et extérieur avec un matériau en plastique mousse (30), lesdits boîtiers intérieur et extérieur (10, 20) ayant une section transversale circulaire ou généralement ovale.

15. Procédé selon la revendication 1, **caractérisé en ce que** le fond (11) dudit boîtier intérieur (10) est de forme incurvée concave.

16. Procédé selon la revendication 1 ou 2, **caractérisé en ce que** le fond (23) dudit boîtier extérieur (20) est de forme incurvée concave.

17. Procédé selon l'une quelconque des revendications 14 à 16, **caractérisé en ce que** lesdits boîtiers intérieur et extérieur (10, 20) sont formés en tant que pièces moulées par rotation séparées, le boîtier intérieur (10) étant par la suite ajusté dans ledit boîtier extérieur (20).

18. Procédé selon la revendication 17, **caractérisé en ce que** ledit boîtier intérieur (10) comprend un matériau rigide.

19. Procédé selon la revendication 17 ou 18, **caractérisé en ce que** ledit boîtier extérieur (20) comprend un matériau ayant une haute résistance aux chocs.

20. Procédé selon l'une quelconque des revendications 14 à 16, **caractérisé en ce que** lesdits boîtiers intérieur et extérieur (10, 20) sont formés conjointement en tant que pièce moulée par rotation unique.

21. Procédé selon l'une quelconque des revendications 14 à 20, **caractérisé en ce que** ledit boîtier extérieur (20) est formé avec une portion de collier périphérique (21) qui s'étend autour dudit boîtier intérieur (10) à proximité de sa partie supérieure ouverte.

22. Procédé selon l'une quelconque des revendications 14 à 21, **caractérisé en ce que** ledit boîtier intérieur est formé avec au moins une prolongation tubulaire (14), dont l'extrémité extérieure comporte un ou plusieur desdits orifices (15) pour l'entrée des câbles, et une ouverture (24) est formée dans la partie latérale dudit boîtier extérieur (20) pour l'accès auxdits orifices (15).

23. Procédé selon la revendication 22, **caractérisé en ce que** ladite portion tubulaire (15) fait saillie vers l'extérieur et vers le haut depuis la partie latérale dudit boîtier intérieur (10) et l'ouverture correspondante (24) dans ledit boîtier extérieur (20) est formée dans une portion de la paroi de ce dernier inclinée vers l'extérieur et vers le bas.

24. Procédé selon l'une quelconque des revendications 14 à 21, **caractérisé en ce que** ledit boîtier extérieur (20) est formé avec une douille (58) qui s'étend vers l'intérieur jusqu'à la paroi périphérique dudit boîtier intérieur (10), pour fournir ledit orifice d'entrée de câble.
